(19) Europäisches Patentamt
European Patent Office
Office européen des brevets

(11) **EP 2 373 964 B1**

(12) **FASCICULE DE BREVET EUROPEEN**

(45) Date de publication et mention
de la délivrance du brevet:
**16.11.2016 Bulletin 2016/46**

(21) Numéro de dépôt: **09801509.2**

(22) Date de dépôt: **08.12.2009**

(51) Int Cl.:
***G01K 7/42*** *(2006.01)*       ***G01K 13/02*** *(2006.01)*

(86) Numéro de dépôt international:
**PCT/FR2009/052447**

(87) Numéro de publication internationale:
**WO 2010/067009 (17.06.2010 Gazette 2010/24)**

(54) **PROCEDE ET SYSTEME DE CORRECTION D'UN SIGNAL DE MESURE D'UNE TEMPERATURE**

VERFAHREN UND SYSTEM ZUM KORRIGIEREN EINES TEMPERATURMESSSIGNALS

METHOD AND SYSTEM FOR CORRECTING A TEMPERATURE MEASUREMENT SIGNAL

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **09.12.2008 FR 0858380**

(43) Date de publication de la demande:
**12.10.2011 Bulletin 2011/41**

(73) Titulaire: **Snecma
75015 Paris (FR)**

(72) Inventeur: **DJELASSI, Cedrik
F-91630 Marolles en Hurepoix (FR)**

(74) Mandataire: **Boura, Olivier et al
Cabinet Beau de Loménie
158, rue de l'Université
75340 Paris Cedex 07 (FR)**

(56) Documents cités:
**GB-A- 1 316 498          US-A- 5 080 496
US-A1- 2005 126 183**

**Description**

Arrière-plan de l'invention

L'invention se rapporte au domaine général des mesures réalisées à l'aide de capteurs, de paramètres tels que par exemple la température d'un fluide.

Elle concerne plus particulièrement la correction d'un signal de mesure délivré par un capteur de température.

L'invention a ainsi une application privilégiée mais non limitative dans le domaine de l'aéronautique, et notamment dans le domaine des systèmes de pilotage de moteurs d'aéronef tels que des turboréacteurs.

De façon connue, il est nécessaire, pour réguler et adapter le pilotage d'un turboréacteur aux diverses contraintes d'un vol, de mesurer la température de différents flux gazeux traversant le turboréacteur (on parle de températures de veines). A cette fin, on utilise des capteurs de température tels des sondes ou des thermocouples, positionnés à différents endroits des veines d'écoulement des flux gazeux.

Ces capteurs de température souffrent généralement, lors d'une mesure, d'une certaine inertie, propre à chaque capteur, et qui dépend notamment de la masse (ou de la taille) de ce capteur. Cette inertie se traduit par un décalage temporel entre le moment où la mesure est réalisée par le capteur et le moment où celui-ci délivre un signal en réponse à cette mesure. On parle « d'effet de trainage » de la mesure. Un tel effet peut provoquer des disfonctionnements du turboréacteur du fait d'une mauvaise adaptation de celui-ci, et ce notamment lors de variations rapides des températures des flux gazeux.

Pour pallier cet inconvénient, il existe des techniques permettant de corriger les signaux de mesure délivrés par un capteur de température, en compensant l'effet de trainage induit par l'inertie de ce capteur. Une telle technique est par exemple décrite dans le document US 5,080,496.

De façon générale, ces techniques s'appuient sur une modélisation numérique de l'inertie du capteur à l'aide d'un filtre paramétré par une estimation de la constante de temps de ce capteur. De façon connue en soi, la constante de temps d'un capteur de mesure caractérise son temps de réponse, c'est-à-dire son inertie.

Pour estimer la constante de temps d'un capteur de température, les techniques de l'art antérieur utilisent des abaques figés, dépendant d'un ou de plusieurs paramètres, comme par exemple le débit d'écoulement du fluide dans lequel se trouve le capteur. Ces abaques indiquent des valeurs moyennes de constantes de temps pour des gabarits de temps de réponse et des conditions prédéterminés. Autrement dit, ils ne tiennent pas réellement compte de la dispersion de l'inertie d'un capteur de température par rapport à un autre.

Or, les technologies de fabrication actuelles ne permettent pas de fabriquer à moindre coût, des capteurs de température pour le pilotage des turboréacteurs qui respectent un gabarit de temps de réponse peu dispersé. Par conséquent, il est difficile d'avoir des abaques adaptés aux différents capteurs de température considérés. Et de nombreux problèmes ont été mis en évidence lorsque les constantes de temps des capteurs embarqués sur un turboréacteur sont éloignées des valeurs données par ces abaques.

Une solution pourrait être de tester chaque capteur de température, par exemple en soufflerie, en vue de déterminer sa constante de temps dans des conditions prédéfinies et d'extrapoler les abaques en fonction de la constante ainsi déterminée. Cependant, un tel test est particulièrement coûteux et représente environ un tiers du prix du capteur de température. Par conséquent, il ne peut être mis en oeuvre pour chaque capteur de température, ce qui signifie qu'un capteur de température en dehors d'un gabarit d'acceptation pour lequel un abaque est disponible, pourrait ne pas être détecté.

En outre, de tels tests sont souvent réalisés pour des débits d'écoulement de fluides limités par les capacités de la soufflerie, et ne permettent pas généralement de couvrir la plage de débits utiles pour les applications d'un turboréacteur. Or, l'extrapolation des abaques de façon à couvrir toute la plage des débits utiles introduit des imprécisions dans la chaîne d'acquisition du capteur de température.

Par ailleurs, comme mentionné précédemment, la constante de temps d'un capteur de température dépend de paramètres tels le débit d'écoulement du fluide dans lequel se trouve le capteur. Cela signifie que pour estimer la constante de temps d'un capteur de température, il est nécessaire, au préalable, d'estimer ce débit d'écoulement de fluide. Par conséquent, la mise en oeuvre d'estimateurs complémentaires sur le turboréacteur est nécessaire, ce qui rend d'autant plus complexe la correction des mesures.

Par conséquent, il existe un besoin d'un procédé de correction des signaux de mesures réalisées par un capteur de température, qui soit simple et permette une compensation de qualité de l'effet de trainage introduit par ce capteur, et ce quelle que soit la constante de temps du capteur.

Objet et résumé de l'invention

La présente invention répond à ce besoin en proposant un procédé de correction d'un signal de mesure d'une température délivré par un capteur, comprenant :

- une étape de modélisation numérique, par un signal modélisé, de la température mesurée par le capteur ;
- une étape d'estimation d'un signal d'erreur de trainage pour ce capteur, à partir du signal modélisé et d'un signal obtenu par filtrage du signal modélisé, ce filtrage étant paramétré par une estimation d'une constante de temps du capteur ; et
- une étape de correction du signal de mesure délivré par le capteur à l'aide du signal d'erreur de trainage estimé.

Conformément à l'invention, l'estimation de la constante de temps du capteur est réalisée en fonction du temps à partir du signal de mesure et du signal modélisé.

L'invention permet donc d'estimer en temps réel la constante de temps du capteur de température considéré, et de corriger en conséquence les signaux de mesure délivrés par ce capteur. La correction apportée aux signaux de mesure (i.e. compensation de l'effet de trainage) est ainsi adaptée au capteur de température utilisé, et ce quelle que soit son inertie.

Ainsi, l'invention rend avantageusement possible l'utilisation de capteurs de température dont les constantes de temps respectives présentent une dispersion importante. Le relâchement de l'exigence de faible dispersion des constantes de temps par rapport à un gabarit donné se traduit par une baisse des coûts de fabrication des capteurs de température.

En outre, des capteurs de température ayant des constantes de temps plus importantes peuvent être considérés. Ceci permet de fabriquer des capteurs de température plus solides mécaniquement, en augmentant notamment la quantité de matière entourant les éléments sensibles de ces capteurs.

De plus, dans le domaine de l'aéronautique, la détermination en soufflerie de la constante de temps des capteurs de température est évitée, diminuant de ce fait le coût de qualification de ces capteurs pour la régulation des turboréacteurs.

Par ailleurs, de façon avantageuse, l'invention ne nécessite pas la mise en oeuvre d'estimateur supplémentaire pour évaluer le débit du fluide dans lequel se trouve plongé le capteur. L'estimation de la constante de temps du capteur est réalisée de façon adaptative, à partir de signaux classiquement évalués pour la prise en compte de l'effet de trainage dans les mesures de température effectuées par ce capteur, à savoir le signal de mesure délivré par le capteur et un signal modélisé représentatif de la température mesurée par le capteur.

Dans un mode particulier de réalisation de l'invention, pour estimer la constante de temps du capteur, on met en oeuvre les étapes suivantes :

(a) obtention d'un premier signal, respectivement d'un second signal, par dérivation du signal de mesure, respectivement du signal modélisé ;
(b) évaluation d'une différence entre la valeur absolue du premier signal et la valeur absolue du second signal ; et
(c) estimation de la constante de temps du capteur à partir de cette différence.

Ainsi, il est possible de s'affranchir des imperfections, en termes d'estimation absolue de la température, du modèle numérique utilisé pour estimer la température mesurée par le capteur. En effet, du fait de l'utilisation des dérivées du signal de mesure et du signal modélisé dans l'invention, il est suffisant de disposer d'un modèle numérique offrant une bonne représentativité des écarts relatifs de la température mesurée.

Dans un mode particulier de réalisation de l'invention, on estime la constante de temps du capteur à partir de la différence à l'aide d'un filtre de type correcteur intégral paramétré par un gain prédéterminé.

Un tel filtre est connu en soi, et présente de bonnes performances pour la correction des signaux de mesure.

En variante, d'autres estimateurs peuvent être utilisés, mettant en oeuvre par exemple des filtres d'ordres plus élevés.

Selon un aspect de l'invention, préalablement à l'étape d'estimation (c) de la constante de temps, on compare la valeur absolue du premier signal par rapport à un seuil prédéterminé.

Cette comparaison permet notamment de détecter si la valeur de la dérivée du signal de mesure est faible et, le cas échéant, de ne pas estimer la valeur de la constante de temps à partir de la différence.

En effet, une valeur faible de la dérivée du signal de mesure signifie que l'on se trouve dans une phase de stabilité thermique, phase au cours de laquelle la constante de temps ne varie pas ou très peu. Or d'un point de vue implémentation matérielle, une valeur parfaitement nulle de la différence ne peut être obtenue du fait de la présence de bruits de mesure inhérents au capteur de mesure et à la chaîne d'acquisition associée. Par conséquent, l'estimation de la constante de temps peut être amenée à diverger, notamment lorsque celle-ci est mise en oeuvre à l'aide d'un filtre de type correcteur intégral.

Selon un autre aspect de l'invention, suite à l'étape d'estimation (c) de la constante de temps, on vérifie que la constante de temps estimée est comprise entre une valeur minimale et une valeur maximale prédéfinies.

De cette sorte, on s'assure que l'estimation de la constante de temps ne diverge pas. On peut notamment utiliser comme valeur minimale et valeur maximale, des valeurs de tolérance prédéfinies pour le capteur de température spécifiées par exemple par le constructeur du capteur de température.

Corrélativement, l'invention vise également un système de correction d'un signal de mesure d'une température délivré par un capteur, comprenant :

- des moyens de modélisation numérique, par un signal modélisé, de la température mesurée par le capteur ;
- des moyens d'estimation d'une constante de temps du capteur ;
- des moyens de filtrage du signal modélisé, paramétrés par la constante de temps du capteur estimée ;
- des moyens d'estimation d'un signal d'erreur de trainage pour le capteur, à partir du signal modélisé et du signal filtré ; et

- des moyens de correction du signal de mesure délivré par le capteur à l'aide du signal d'erreur de trainage estimé ;

ce système étant remarquable en ce que les moyens d'estimation de la constante de temps du capteur sont adaptés à estimer cette constante en fonction du temps à partir du signal de mesure et du signal modélisé.

Comme mentionné précédemment, du fait de ses caractéristiques et avantages précitées, l'invention a une application privilégiée mais non limitative dans le domaine de l'aéronautique et plus particulièrement dans le domaine de la régulation et du pilotage de moteurs d'aéronef.

Ainsi, l'invention vise également un turboréacteur comportant au moins un système de correction d'un signal de mesure délivré par un capteur de température conforme à l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système de correction d'un signal de mesure conforme à l'invention ainsi que les principales étapes d'un procédé de correction conforme à l'invention, dans un mode particulier de réalisation ;
- la figure 2 représente, sous forme schématique, un exemple de module de modélisation numérique pouvant être utilisé dans le système de correction représenté sur la figure 1, pour modéliser la température mesurée par le capteur ;
- la figure 3 représente, sous forme d'organigramme, les principales étapes mises en oeuvre pour estimer la constante de temps d'un capteur de température au cours d'un procédé de correction d'un signal de mesure conforme à l'invention, dans un mode particulier de réalisation, lorsqu'il est mis en oeuvre par le système représenté sur la figure 1 ; et
- la figure 4 représente, sous forme schématique, un exemple de moyens d'estimation de la constante de temps d'un capteur en fonction du temps mettant en oeuvre les étapes représentées sur la figure 3.

Description détaillée d'un mode de réalisation

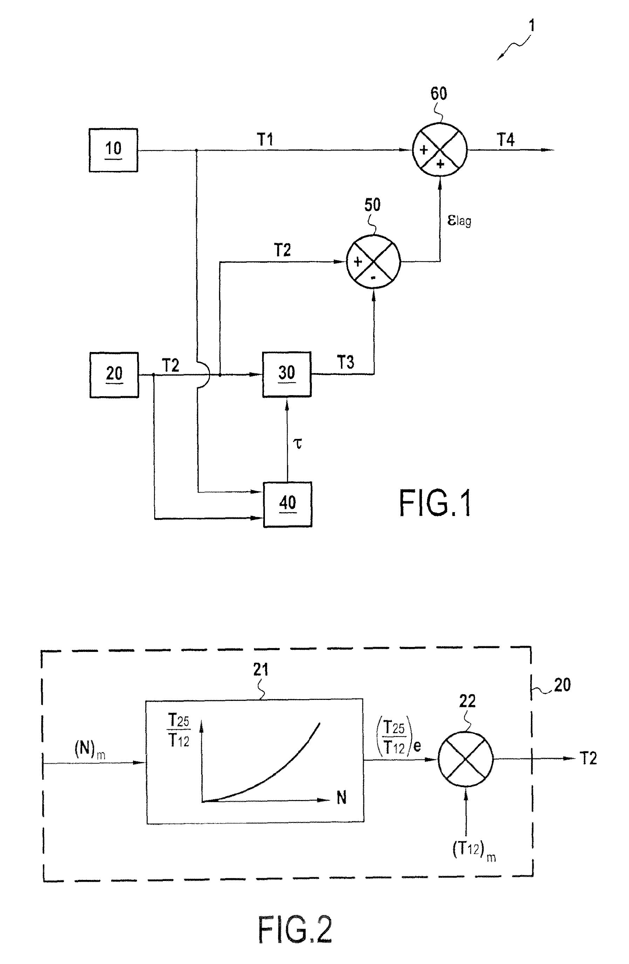

La figure 1 représente, dans un mode particulier de réalisation, un système 1 et un procédé de correction conformes à l'invention, et permettant la correction d'un signal de mesure T1 délivré par un capteur de température 10 présentant une inertie thermique, et utilisé pour la régulation d'un turboréacteur d'un avion.

Cette hypothèse n'est toutefois pas limitative, l'invention pouvant être mise en oeuvre pour d'autres applications susceptibles d'utiliser un capteur de température présentant une inertie thermique.

Ainsi, dans le mode de réalisation décrit ici, tout ou partie du système de correction 1 est couplé ou intégré au dispositif de régulation pleine autorité de l'avion propulsé par le turboréacteur, connu également sous le nom de FADEC (Full Authority Digital Engine Control).

Plus particulièrement dans l'exemple décrit ici, on envisage la correction d'un signal de mesure représentatif de la température $T_{25}$, en entrée du compresseur haute-pression du turboréacteur. Bien entendu, l'invention s'applique également à d'autres températures pouvant être mesurées dans le turboréacteur.

Dans la suite de la description, on considère des signaux et des paramètres échantillonnés à une période d'échantillonnage *Te*. Cette période d'échantillonnage *Te* est, par exemple, de l'ordre de 20 à 40 ms. De façon connue, elle dépend notamment de la dynamique de la température mesurée.

On notera cependant que l'invention peut également être mise en oeuvre avec des signaux et des paramètres continus.

Conformément à l'invention, le système de correction 1 comprend un module de modélisation numérique 20, utilisé pour modéliser la température $T_{25}$ mesurée par le capteur de température 10. Autrement dit, le module de modélisation numérique 20 est adapté à modéliser le signal de mesure qui serait délivré par le capteur de température 10 si celui-ci fonctionnait sans défaut lié à sa constante de temps ou de façon équivalente si celui-ci avait une constante de temps nulle.

La figure 2 représente sous forme schématique, un exemple de module de modélisation numérique pouvant être utilisé.

Selon cet exemple, le module de modélisation numérique 20 comprend une entité 21 adaptée à délivrer une estimation du rapport de températures $T_{25}/T_{12}$ à partir d'une mesure $(N)_m$ de la vitesse de rotation de la soufflante du turboréacteur, $T_{12}$ désignant la température à l'entrée de cette soufflante. Cette estimation est calculée par l'entité 21 à l'aide d'une courbe prédéterminée représentant l'évolution du rapport adiabatique de températures $T_{25}/T_{12}$ en fonction de la vitesse de rotation N de la soufflante. Une telle courbe est connue de l'homme du métier et ne sera pas décrite plus en détails ici.

L'estimation du rapport $T_{25}/T_{12}$, notée $(T_{25}/T_{12})_e$, est ensuite envoyée vers un circuit multiplicateur 22, adapté à multiplier ce rapport par une mesure de la température $T_{12}$, notée $(T_{12})_m$. On obtient ainsi, en sortie du circuit multiplicateur 22, le signal modélisé T2.

La mesure $(T_{12})_m$ de la température $T_{12}$ et la mesure $(N)_m$ de la vitesse de rotation de la soufflante sont obtenues à l'aide de capteurs situés dans le turboréacteur connus en soi et qui ne seront pas détaillés davantage ici.

En variante, un modèle numérique plus élaboré et plus précis de la température mesurée par le capteur peut être utilisé. Un tel modèle est décrit notamment dans le document US 5,080,496.

On notera, que dans l'exemple décrit ici, on considère la correction d'un signal de mesure réalisé sur la température $T_{25}$. Toutefois, comme mentionné précédemment, l'invention s'applique à d'autres températures pouvant être mesurées dans le turboréacteur à condition de disposer d'un modèle d'évolution de ces températures.

Le signal T2 ainsi modélisé par le module 20 est ensuite filtré par un module 30 modélisant l'inertie du capteur de température. Ce module 30 est, par exemple, un filtre du premier ordre dont la fonction de transfert $H_{10}(p)$ est donnée par :

$$H_{10}(p) = \frac{1}{1 + \tau p}$$

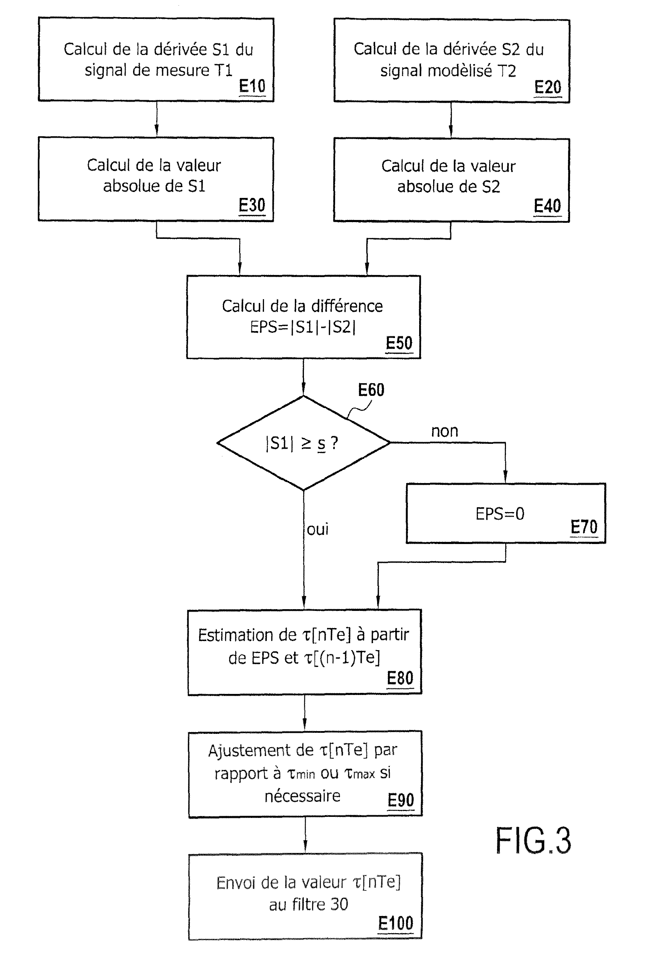

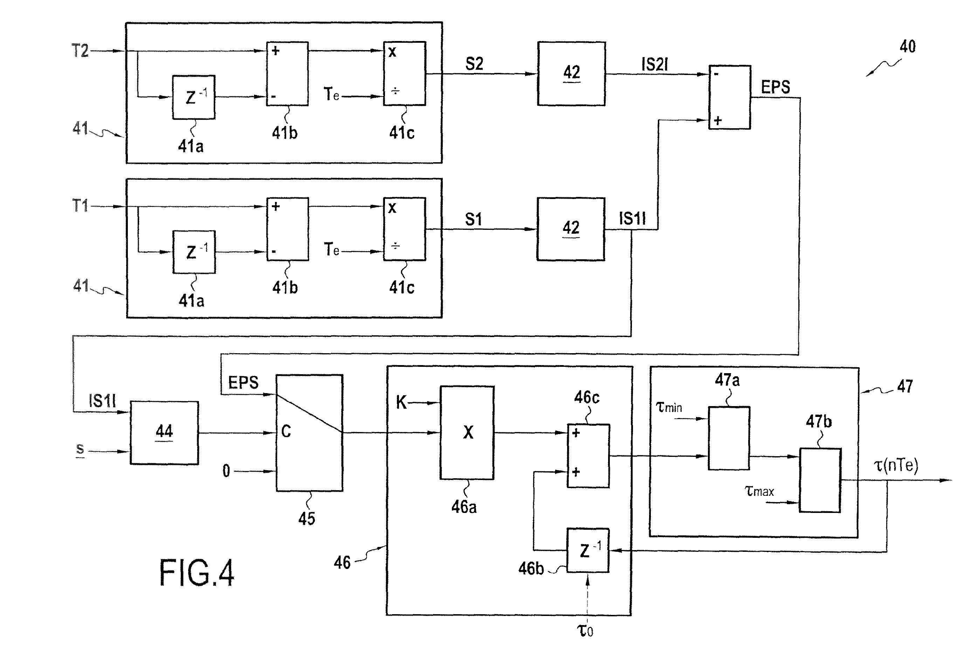

où $\tau$ est un paramètre représentant la constante de temps du capteur 10. Le paramètre $\tau$ est estimé par un module d'estimation 40, détaillé ultérieurement en référence aux figures 3 et 4.

Un module de calcul 50 estime alors le signal d'erreur de trainage $\varepsilon_{lag}$ introduit par le capteur 10 de température, en calculant un signal de différence entre le signal modélisé T2 et le signal modélisé filtré T3.

L'erreur de trainage $\varepsilon_{lag}$ est ensuite ajoutée par un module de correction 60 au signal de mesure T1 délivré par le capteur 10. On obtient ainsi un signal de mesure corrigé T4, dans lequel l'effet de traînage introduit par le capteur 10 de température a été compensé.

Nous allons maintenant décrire, en référence aux figures 3 et 4, les principales étapes ainsi que les moyens mis en oeuvre par le module d'estimation 40 pour estimer la constante de temps $\tau$ du capteur de température en fonction du temps.

Dans l'exemple de réalisation décrit ici, le module d'estimation 40 met en oeuvre un algorithme adaptatif pour estimer $\tau$ en temps réel. Plus précisément, la constante de temps $\tau$ est évaluée à un instant donné $t=nTe$ (n étant un entier) à partir d'une valeur de cette constante estimée à un instant précédent.

Conformément à l'invention, pour estimer la constante de temps $\tau$ du capteur 10, on utilise le signal de mesure T1 et le signal modélisé T2. Plus particulièrement, dans le mode de réalisation décrit ici, on évalue d'une part, un premier signal S1 par dérivation du signal de mesure T1 (étape E10), et d'autre part, un second signal S2 par dérivation du signal modélisé T2 (étape E20).

La dérivée S1 du signal de mesure est obtenue à l'aide d'un premier module dérivateur 41. Celui-ci est, par exemple, un filtre d'ordre 1 adapté à évaluer le signal S1 à l'instant $t=nTe$ selon l'équation suivante :

$$S1[nTe] = \frac{T1[nTe] - T1[(n-1)Te]}{Te}$$

dans laquelle S1[$nTe$], respectivement T1[$nTe$], représente le signal S1, respectivement le signal T1, échantillonné à l'instant $nTe$.

A cette fin, de façon connue, le module dérivateur 41 comprend :

- une cellule de retard 41a délivrant le signal de mesure à l'instant précédent $(n-1)Te$ ;
- un élément soustracteur 41b permettant de soustraire au signal de mesure T1[$nTe$], le signal de mesure retardé T1[$(n-1)Te$] ; et
- un élément diviseur 41c adapté à diviser la somme ainsi obtenue par la période d'échantillonnage $Te$.

En variante, le module dérivateur 41 peut être un filtre d'ordre supérieur.

Le signal S2 est obtenu de façon similaire à partir du signal modélisé T2, à l'aide d'un second module dérivateur 41, adapté à évaluer le signal S2 à l'instant $nTe$ selon l'équation suivante :

$$S2[nTe] = \frac{T2[nTe] - T2[(n-1)Te]}{Te}$$

dans laquelle S2[$nTe$], respectivement T2[$nTe$], représente le signal S2, respectivement le signal T2, échantillonné à l'instant $nTe$.

On évalue ensuite la valeur absolue |S1[$nTe$]| du signal S1 (étape E30), respectivement la valeur absolue |S2[$nT6$]| du signal S2 (étape E40), à l'aide d'un module de calcul 42 approprié, connu de l'homme du métier et non détaillé ici.

Un signal de différence, noté EPS, est alors calculé par un module soustracteur 43, à partir des signaux |S1[$nTe$]| et |S2[$nTe$]| (étape E50), par exemple ici selon l'équation suivante :

$$EPS = |S1[nTe]| - |S2[nTe]|$$

Dans le mode de réalisation décrit ici, on compare le signal |S1[$nTe$]| obtenu à partir de la dérivée du signal de mesure T1, à un seuil prédéfini s à l'aide d'un comparateur 44 (étape E60). Cette comparaison est destinée à détecter une valeur faible du signal S1, représentative d'une phase de stabilité thermique. Le seuil prédéfini s sera ainsi choisi de sorte à permettre cette détection.

En raison de bruits de mesure inhérents à la chaîne d'acquisition du capteur de température 10, il est en effet difficile voire impossible d'obtenir une valeur EPS nulle lors d'une telle phase de stabilité thermique. Or, ceci peut causer une divergence de l'algorithme adaptatif. Par conséquent, pour pallier cet inconvénient, on propose avantageusement ici de forcer la valeur de la différence EPS à zéro lorsque la valeur absolue du premier signal S1 est inférieure à un certain seuil s (étape E70).

Cette opération est réalisée par un module 45 dont l'action est conditionnée par la sortie du comparateur 44, à savoir par exemple :

- la sortie du module 45 est aiguillée sur EPS si $|S1[nTe]| \geq$ s ;
- sinon la sortie du module 45 est aiguillée sur 0.

On notera que dans le mode de réalisation décrit ici, la comparaison E60 est mise en oeuvre après l'évaluation de la différence EPS. En variante, elle peut être réalisée préalablement à l'évaluation de la différence EPS, la mise en oeuvre de l'évaluation du signal S2 pouvant être conditionnée par le résultat de la comparaison.

La sortie du module 45 est ensuite envoyée vers un estimateur 46, adapté à estimer le paramètre $\tau$ à l'instant *nTe,* en fonction de la différence EPS et d'une valeur précédemment estimée du paramètre $\tau$. L'estimateur 46 est par exemple un estimateur de type correcteur intégral (ou filtre correcteur intégral), paramétré par un gain K (K étant un nombre réel), connu de l'homme du métier et réalisant l'opération suivante (étape E80) :

$$\tau[nTe] = \tau[(n-1)Te] + K \times EPS$$

où $\tau[nTe]$ désigne la valeur de la constante $\tau$ à l'instant *nTe.*

Autrement dit, lorsqu'à l'étape E60 on détecte que |S1[nTe]|<s, le fait de forcer la valeur de la différence EPS à zéro au cours de l'étape E70 revient à « suspendre » en quelque sorte l'estimation de la constante de temps $\tau$, en prenant comme valeur de la constante de temps $\tau$ à l'instant *nTe* la valeur de la constante de temps $\tau$ estimée à l'instant précédent *(n-1)Te.* On évite ainsi une divergence de l'algorithme adaptatif.

De façon connue, l'estimateur correcteur intégral 46 comprend un élément multiplieur 46a, adapté à multiplier le signal de différence EPS par le gain K, une cellule de retard 46b délivrant la valeur $\tau[(n-1)Te]$, et un élément additionneur 46c adapté à calculer la valeur $\tau[nTe]$ selon l'équation indiquée précédemment.

On notera que, de façon connue en soi, le choix de la valeur initiale de la constante de temps $\tau_0$, de la période d'échantillonnage *Te* et de la valeur du gain K résulte d'un compromis entre performance de l'estimation et rapidité de convergence de l'algorithme adaptatif. On pourra, par exemple, choisir la valeur initiale de la constante de temps $\tau_0$ dans un abaque fourni par le constructeur du capteur de température 10 et tel qu'utilisé dans les techniques de l'art antérieur.

En variante, d'autres estimateurs qu'un estimateur de type correcteur intégral peuvent être utilisés, tels que par exemple des estimateurs mettant en oeuvre des filtres d'ordres plus élevés.

Dans le mode de réalisation décrit ici, la constante de temps $\tau[nTe]$ estimée par l'estimateur correcteur intégral 46 est ensuite envoyée vers un module 47, chargé de s'assurer que la valeur de la constante est comprise entre une valeur minimale $\tau_{min}$ et une valeur maximale $\tau_{max}$ prédéterminées, et d'ajuster cette valeur en cas de divergence par rapport aux valeurs minimale et maximale.

A cette fin, le module d'ajustement 47 comprend un premier module 47a, adapté à forcer la valeur de la constante de temps $\tau[nTe]$ à $\tau_{min}$ si $\tau[nTe] < m\tau_{min}$, et un second module 47b adapté à forcer la valeur de la constante de temps $\tau[nTe]$ à $\tau_{max}$ si $\tau[nTe] > \tau_{max}$ (étape E90). Les valeurs minimale et maximale auront été choisies au préalable, par exemple en fonction des tolérances minimale et maximale du capteur de température indiquées par le constructeur du capteur.

La constante de temps éventuellement ajustée est ensuite envoyée vers le filtre 30 (étape E100), de sorte à être utilisée pour la génération du signal filtré T3.

## Revendications

1. Procédé de correction d'un signal de mesure (T1) d'une température de fluide délivré par un capteur (10), ledit procédé comprenant :

   - une étape de modélisation numérique, par un signal modélisé (T2), de la température mesurée par le capteur (10) ;
   - une étape d'estimation d'un signal d'erreur de trainage ($\varepsilon_{lag}$) pour ce capteur, à partir du signal modélisé (T2) et d'un signal (T3) obtenu par filtrage du signal modélisé, ce filtrage étant paramétré par une estimation d'une constante de temps ($\tau$) du capteur ; et
   - une étape de correction du signal de mesure (T1) délivré par le capteur (10) à l'aide du signal d'erreur de trainage estimé ;

   ledit procédé étant **caractérisé en ce que** l'estimation de la constante de temps du capteur est réalisée en fonction du temps à partir du signal de mesure (T1) et du signal modélisé (T2).

2. Procédé de correction selon la revendication 1, **caractérisé en ce que**, pour estimer la constante de temps du capteur, on met en oeuvre les étapes suivantes :

   (a) obtention (E10,E20) d'un premier signal (S1), respectivement d'un second signal (S2), par dérivation du signal de mesure (T1), respectivement du signal modélisé (T2) ;

(b) évaluation (E50) d'une différence (EPS) entre la valeur absolue du premier signal et la valeur absolue du second signal ; et

(c) estimation (E80) de la constante de temps du capteur à partir de cette différence.

3. Procédé de correction selon la revendication 2, **caractérisé en ce que** l'on estime la constante de temps du capteur à partir de la différence à l'aide d'un filtre (46) de type correcteur intégral paramétré par un gain prédéterminé (K).

4. Procédé de correction selon la revendication 2 ou 3, **caractérisé en ce que**, préalablement à l'étape d'estimation (c) de la constante de temps, on compare (E60) la valeur absolue du premier signal par rapport à un seuil prédéterminé.

5. Procédé de correction selon l'une quelconque des revendications 2 à 4, **caractérisé en ce que** suite à l'étape (c) d'estimation de la constante de temps, on vérifie (E90) que la constante de temps estimée est comprise entre une valeur minimale et une valeur maximale prédéfinies.

6. Système de correction (1) d'un signal de mesure d'une température de fluide délivré par un capteur (10), ledit système comprenant :

- des moyens (20) de modélisation numérique, par un signal modélisé, de la température mesurée par le capteur (10) ;
- des moyens (40) d'estimation d'une constante de temps du capteur (10) ;
- des moyens (30) de filtrage du signal modélisé, paramétrés par la constante de temps estimée du capteur;
- des moyens (50) d'estimation d'un signal d'erreur de trainage pour le capteur, à partir du signal modélisé et du signal filtré ; et
- des moyens (60) de correction du signal de mesure délivré par le capteur (10) à l'aide du signal d'erreur de trainage estimé ;

ledit système étant **caractérisé en ce que** les moyens d'estimation (40) de la constante de temps du capteur sont adaptés à estimer cette constante de temps en fonction du temps, à partir du signal de mesure (T1) et du signal modélisé (T2).

7. Turboréacteur **caractérisé en ce qu'**il comporte au moins un système de correction d'un signal de mesure d'une température de fluide délivré par un capteur selon la revendication 6.

**Patentansprüche**

1. Verfahren zur Korrektur eines Messsignals (T1) einer Fluidtemperatur, das von einem Sensor (10) geliefert wird, wobei das Verfahren umfasst:

- einen Schritt der digitalen Modellierung der vom Sensor (10) gemessenen Temperatur durch ein modelliertes Signal (T2),
- einen Schritt der Schätzung eines Schleppfehlersignals ($\dot{\varepsilon}_{lag}$) für diesen Sensor aus dem modulierten Signal (T2) und einem Signal (T3), das durch Filterung des modellierten Signals erhalten wird, wobei diese Filterung durch eine Schätzung einer Zeitkonstante (T) des Sensors parametriert wird, und
- einen Schritt der Korrektur des vom Sensor (10) gelieferten Messsignals (T1) mit Hilfe des geschätzten Schleppfehlersignals,

wobei das Verfahren **dadurch gekennzeichnet ist, dass** die Schätzung der Zeitkonstante des Sensors in Abhängigkeit von der Zeit auf Basis des Messsignals (T1) und des modellierten Signals (T2) erfolgt.

2. Korrekturverfahren nach Anspruch 1, **dadurch gekennzeichnet, dass** zur Schätzung der Zeitkonstante des Sensors die folgenden Schritte zum Einsatz kommen:

(a) Erhalt (E10, E20) eines ersten Signals (S1) bzw. eines zweiten Signals (S2) durch Ablenkung des Messsignals (T1) bzw. des modellierten Signals (T2),

(b) Bewertung (E50) einer Differenz (EPS) zwischen dem Absolutwert des ersten Signals und dem Absolutwert des zweiten Signals, und

(c) Schätzung (E80) der Zeitkonstante des Sensors auf Basis dieser Differenz.

3. Korrekturverfahren nach Anspruch 2, **dadurch gekennzeichnet, dass** die Zeitkonstante des Sensors auf Basis der Differenz mit Hilfe eines Filters (46) vom Typ parametrierter integraler Korrektor durch eine vorbestimmte Verstärkung (K) geschätzt wird.

4. Korrekturverfahren nach Anspruch 2 oder 3, **dadurch gekennzeichnet, dass** vor dem Schritt der Schätzung (c) der Zeitkonstante der Absolutwert (E60) des ersten Signals in Bezug zu einer vorbestimmten Schwelle verglichen wird.

5. Korrekturverfahren nach einem der Ansprüche 2 bis 4, **dadurch gekennzeichnet, dass** nach dem Schritt (c) der Schätzung der Zeitkonstante überprüft wird (E90), ob die geschätzte Zeitkonstante zwischen einem vordefinierten Mindestwert und Höchstwert enthalten ist.

**6.** System (1) zur Korrektur eines Messsignals einer Fluidtemperatur, das von einem Sensor (10) geliefert wird, wobei das System umfasst:

- Mittel (20) zur digitalen Modellierung der vom Sensor (10) gemessenen Temperatur durch ein modelliertes Signal,
- Mittel (40) zur Schätzung einer Zeitkonstante des Sensors (10),
- Mittel (30) zur Filterung des modellierten Signals, die durch die geschätzte Zeitkonstante des Sensors parametriert werden,
- Mittel (50) zur Schätzung eines Schleppfehlersignals für den Sensor auf Basis des modellierten Signals und des gefilterten Signals, und
- Mittel (60) zur Korrektur des vom Sensor (10) gelieferten Messsignals mit Hilfe des geschätzten Schleppfehlersignals,

wobei das System **dadurch gekennzeichnet ist, dass** die Mittel (40) zur Schätzung der Zeitkonstante des Sensors dazu vorgesehen sind, diese Zeitkonstante in Abhängigkeit von der Zeit auf Basis des Messsignals (T1) und des modellierten Signals (T2) zu schätzen.

**7.** Turboreaktor, **dadurch gekennzeichnet, dass** er mindestens ein System zur Korrektur eines Messsignals einer Fluidtemperatur, das von einem Sensor nach Anspruch 6 geliefert wird, umfasst.

**Claims**

**1.** A method of correcting a measurement signal (T1) of a fluid temperature delivered by a sensor (10), said method including:

• a step of digitally modelling the temperature measured by the sensor (10) by using a modeled signal (T2);
• a step of estimating a lag error signal ($\varepsilon_{lag}$) for said sensor from the modeled signal (T2) and a signal (T3) obtained by filtering the modeled signal, the filter having as a parameter an estimate of a time constant ($\tau$) of the sensor; and
• a step of correcting the measurement signal (T1) delivered by the sensor (10) by means of the estimated lag error signal;
said method being **characterized in that** the time constant of the sensor is estimated as a function of time from the measurement signal (T1) and the modeled signal (T2).

**2.** A correction method according to claim 1, **characterized in that**, to estimate the time constant of the sensor, the following steps are performed:

(a) obtaining (E10, E20) first and second signals (S1 and S2) respectively, by differentiating the measurement signal (T1) and the modeled signal (T2);
(b) evaluating (E50) a difference (EPS) between the absolute value of the first signal and the absolute value of the second signal; and
(c) estimating (E80) the time constant of the sensor from that difference.

**3.** A correction method according to claim 2, **characterized in that** the time constant of the sensor is estimated from the difference using an integral corrector type filter (46) having a predetermined gain (K) as a parameter.

**4.** A correction method according to claim 2 or 3, **characterized in that**, before the step (c) of estimating the time constant, the absolute value of the first signal is compared (E60) to a predetermined threshold.

**5.** A correction method according to any of claims 2 to 4, **characterized in that** after the step (c) of estimating the time constant, it is verified (E90) that the estimated time constant is between a predefined minimum value and a predefined maximum value.

**6.** A system (1) for correcting a measurement signal of a fluid temperature delivered by a sensor (10), said system including:

• means (20) for digitally modelling the temperature measured by the sensor (10) by using a modeled signal;
• means (40) for estimating a time constant of the sensor (10);
• means (30) for filtering the modeled signal, having as parameter the estimated time constant of the sensor;
• means (50) for estimating a lag error signal for the sensor from the modeled signal and filtered signal; and
• means (60) for correcting the measurement signal delivered by the sensor (10) using the estimated lag error signal;

said system being **characterized in that** the means (40) for estimating the time constant of the sensor are adapted to estimate that time constant as a function of time from the measurement signal (T1) and the modeled signal (T2).

**7.** A turbojet engine **characterized in that** it includes at least one system for correcting a measurement signal of a fluid temperature delivered by a sensor according to claim 6.

FIG.1

FIG.2

```
┌─────────────────────────┐        ┌─────────────────────────┐
│ Calcul de la dérivée S1 du│       │ Calcul de la dérivée S2 du│
│ signal de mesure T1      │        │ signal modèlisé T2       │
│                    E10   │        │                    E20   │
└─────────────────────────┘        └─────────────────────────┘
            │                                  │
            ▼                                  ▼
┌─────────────────────────┐        ┌─────────────────────────┐
│ Calcul de la valeur     │        │ Calcul de la valeur     │
│ absolue de S1           │        │ absolue de S2           │
│                    E30   │        │                    E40   │
└─────────────────────────┘        └─────────────────────────┘
```

Calcul de la différence
EPS=|S1|-|S2|
E50

E60

|S1| ≥ s ?   non

oui

EPS=0   E70

Estimation de τ[nTe] à partir
de EPS et τ[(n-1)Te]
E80

Ajustement de τ[nTe] par
rapport à τmin ou τmax si
nécessaire   E90

Envoi de la valeur τ[nTe]
au filtre 30
E100

FIG.3

FIG.4

EP 2 373 964 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5080496 A